# EUROPEAN PATENT SPECIFICATION

(11) **EP 2 940 977 B1**
(45) Date of publication and mention of the grant of the patent: **29.08.2018**
(21) Application number: 15157897.8
(22) Date of filing: 05.03.2015
(51) Int. Cl.: H04M 3/493, H04M 1/247, H04M 1/725

(54) **METHOD AND DEVICE FOR SENDING INFORMATION IN VOICE SERVICE**
VERFAHREN UND VORRICHTUNG ZUM SENDEN VON INFORMATIONEN IN SPRACHDIENSTEN
PROCÉDÉ ET DISPOSITIF POUR ENVOYER DES INFORMATIONS DANS UN SERVICE VOCAL

(30) Priority: 30.04.2014 CN 201410183189
(43) Date of publication of application: 04.11.2015
(73) Proprietor: Xiaomi Inc., Beijing 100085 (CN)
(72) Inventor: Wang, Wenlin, 100085 Beijing (CN); Xu, Meng, 100085 Beijing (CN); Peng, Tao, 100085 Beijing (CN); Hong, Feng, 100085 Beijing (CN)
(74) Representative: Delumeau, François Guy

(56) References cited:
- US-A1- 2012 314 848
- US-A1- 2013 022 191

## Description

### TECHNICAL FIELD

The present disclosure generally relates to the field of communication, and more particularly, to a method and a device for sending information in a voice service.

### BACKGROUND

An automatic voice service is an automatic business agency service, and after dialing a service number, a client may issue an instruction to an automatic voice service system using audio buttons, and then obtain a corresponding service from the automatic voice service system.

In the related art, when a user uses the automatic voice service, the user dials the service number of the automatic voice service system with a terminal, and after the service number is dialed, the automatic voice service system plays a voice prompt about a related menu, according to the voice prompt, the user presses corresponding buttons on the terminal to send the instruction to the automatic voice service system, so as to enter a corresponding sub-menu, and after entering the lowermost sub-menu, the user presses the corresponding buttons to send the instruction to the automatic voice service system according to the voice prompt, so as to select a desired service, and at last, the corresponding service is provided by the automatic voice service system.

For example, the user may obtain various types of services provided by a bank by dialing 4008205555. After the number is dialed, the user may acquire services such as for credit card application, credit card bill enquiry, and credit card loss reporting according to the voice prompt played by the voice service system. In acquiring the services as above, the user is usually required to press the corresponding buttons to input personal information such as credit card number, cell phone number reserved in the bank, and ID card number.

While the present disclosure is implemented, at least the following deficiencies are found: since the user uses the automatic voice service in daily work and life frequently, and every time the user is required to press the corresponding buttons to input the personal information such as various types of card numbers, the cell phone number reserved in the bank, and the ID number, it takes a long time to input the personal information, such that more communication resources and energy resources of the terminal and a server are consumed. If the user inputs a wrong number, he/she needs to input again, such that much more communication resources and energy resources are consumed.
Document US 2013/0022191 provides a system for generating an Interactive Voice Response (IVR) database.
Document US 2012/0314848 discloses a system adapted to map to a voice response unit (VRU) map associated with a targeted VRU call specific information input by a user and user information prestored in a database.

### SUMMARY

The problem in the related art is that the automatic voice service needs to consume a great deal of time and resources while the personal information of the user is input. This object is solved by the subject matter of the independent claims. Preferred embodiments are defined by the dependent claims. In the following description, 'embodiments' are to be read as 'exemplary embodiments'. The technical solutions are as follows.

According to a first aspect of the embodiments of the present disclosure, there is provided a method for sending information in a voice service, including:
detecting whether a service acquired in an automatic voice service system is required to input user personal information;
if the service is required to input the user personal information, acquiring user personal information required for the service from a pre-stored user personal information database; and
sending the user personal information required for the service to the automatic voice service system, wherein the automatic voice service system is configured to provide the service according to the user personal information.

In a particular embodiment, the detecting whether the service acquired in the automatic voice service system is required to input the user personal information includes:
before a service number of the automatic voice service system is dialed, displaying at least one service corresponding to the service number, receiving a selection signal corresponding to the at least one service, acquiring a service menu corresponding to the selected service, and detecting whether the user personal information is required to be input according to the service menu; or
after a service number of the automatic voice service system is dialed, displaying at least one service corresponding to the service number, receiving a selection signal corresponding to the at least one service, acquiring a service menu corresponding to the selected service, and detecting whether the user personal information is required to be input according to the service menu.

In a particular embodiment, the acquiring the user personal information required for the service from the pre-stored user personal information database includes:
when the service menu includes an information type of the user personal information required for the service, acquiring m pieces of the user personal information that match the information type from the pre-stored user personal information database, wherein the user personal information database includes n pieces of the user personal information, 1≤m≤n, and m and n are positive integers;
displaying the m pieces of the user personal information;
receiving selection signals corresponding to the m pieces of the user personal information; and
using the selected user personal information as the user personal information required for the service.

In a particular embodiment, the displaying the m pieces of the user personal information includes:
displaying a portion of contents of the user personal information in a hidden manner for each piece of the m pieces of the user personal information.

In a particular embodiment, the method further includes:
pre-receiving at least one piece of the user personal information;
storing the at least one piece of the user personal information to the user personal information database, wherein
the user personal information database is locally stored, or
the user personal information database is stored in a server with a user service account number, or
the user personal information database is not only locally stored, but also stored in the server with the user service account number, both of which are mutually synchronized.

In a particular embodiment, the storing the at least one piece of the user personal information to the user personal information database includes:
encrypting the user personal information for every piece of the received user personal information; and
storing the encrypted user personal information to the user personal information database.

In a particular embodiment, the method further includes:
binding the user personal information database to a SIM card of a user identification module.

In a particular embodiment, the method further includes:
detecting whether a SIM card in a terminal is the SIM card bound to the user personal database; and
if it is detected that the SIM card in the terminal is the SIM card bound to the user personal database, performing the step of acquiring the user personal information required for the service from the pre-stored user personal information database.

In a particular embodiment, the method further includes:
detecting whether a current user has an authority to operate the user personal information database; and
if it is detected that the current user has the authority to operate the user personal information database, performing a corresponding operation according to a received information operating instruction, wherein the information operating instruction includes any one of an information viewing instruction, an information modifying instruction and an information acquiring instruction.

In a particular embodiment, the sending the user personal information required for the service to the automatic voice service system includes:
generating at least one dual-tone multiple-frequency (DTMF) signal corresponding to the user personal information required for the service; and
sending the at least one DTMF signal to the automatic voice service system.

According to a second aspect, the invention relates to a device for sending information in a voice service, including:
a service detecting module configured to detect whether a service acquired in an automatic voice service system is required to input user personal information;
an information acquiring module configured to acquire user personal information required for the service from a pre-stored user personal information database, if the service is required to input the user personal information; and
an information sending module configured to send the user personal information required for the service to the automatic voice service system, wherein the automatic voice service system is configured to provide the service according to the user personal information.

In a particular embodiment, the service detecting module includes a first detecting unit or a second detecting unit, wherein
the first detecting unit is configured to, before a service number of the automatic voice service system is dialed, display at least one service corresponding to the service number, receive a selection signal corresponding to the at least one service, acquire a service menu corresponding to the selected service, and detect whether the user personal information is required to be input according to the service menu, and
the second detecting unit is configured to, after a service number of the automatic voice service system is dialed, display at least one service corresponding to the service number, receive a selection signal corresponding to the at least one service, acquire a service menu corresponding to the selected service, and detect whether the user personal information is required to be input according to the service menu.

In a particular embodiment, the information acquiring module includes an information acquiring unit, an information displaying unit, a selection receiving unit and an information determining unit, wherein
the information acquiring unit is configured to, when the service menu includes an information type of the user personal information required for the service, acquire m pieces of the user personal information that match the information type from the pre-stored user personal information database, wherein the user personal information database includes n pieces of the user personal information, 1≤m≤n, and m and n are positive integers;
the information displaying unit is configured to display the m pieces of the user personal information;
the selection receiving unit is configured to receive selection signals corresponding to the m pieces of the user personal information; and
the information determining unit is configured to use the selected user personal information as the user personal information required for the service.

In a particular embodiment, the information displaying unit is further configured to display a portion of contents of the user personal information in a hidden manner for each piece of the m pieces of the user personal information.

In a particular embodiment, the device further includes:
an information pre-receiving module configured to pre-receive at least one piece of the user personal information;
an information storing module configured to store the at least one piece of the user personal information to the user personal information database, wherein
the user personal information database is locally stored, or
the user personal information database is stored in a server with a user service account number, or
the user personal information database is not only locally stored, but also stored in the server with the user service account number, both of which are mutually synchronized.

Alternatively, the information storing module includes an information encrypting unit and an information storing unit, wherein
the information encrypting unit is configured to encrypt the user personal information for each piece of the received user personal information; and
the information storing unit is configured to store the encrypted user personal information to the user personal information database.

In a particular embodiment, the device further includes:
an information binding module configured to bind the user personal information database to a SIM card of a user identification module.

In a particular embodiment, the device further includes:
a card detecting module configured to detect whether a SIM card in a terminal is the SIM card bound to the user personal database, wherein
the information acquiring module is further configured to, if it is detected that the SIM card in the terminal is the SIM card bound to the user personal database, perform the step of acquiring the user personal information required for the service from the pre-stored user personal information database.

In a particular embodiment, the device further includes:
an authority detecting module configured to detect whether a current user has an authority to operate the user personal information database; and
an operation performing module configured to, if it is detected that the current user has the authority to operate the user personal information database, perform a corresponding operation according to a received information operating instruction, wherein the information operating instruction includes any one of an information viewing instruction, an information modifying instruction and an information acquiring instruction.

In a particular embodiment, the information sending module includes a signal generating unit and a signal sending unit, wherein
the signal generating unit is configured to generate at least one dual-tone multiple-frequency (DTMF) signal corresponding to the user personal information required for the service; and
the signal sending unit configured to send the at least one DTMF signal to the automatic voice service system.

According to a third aspect, the invention relates to a device for sending information in a voice service, including:
a processor;
a memory to store instructions executed by the processor, wherein
the processor is configured to:
detect whether a service acquired in an automatic voice service system is required to input user personal information;
if the service is required to input the user personal information, acquire user personal information required for the service from a pre-stored user personal information database; and
send the user personal information required for the service to the automatic voice service system, wherein the automatic voice service system is configured to provide the service according to the user personal information.

In one particular embodiment, the steps of the method for sending information in a voice service are determined by computer program instructions.

Consequently, according to a fourth aspect, the invention is also directed to a computer program for executing the steps of a method for sending information in a voice service as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the present disclosure.

### BRIEF DESCRIPTION OF THE DRAWINGS

The accompanying drawings, which are hereby incorporated in and constitute a part of this specification, illustrate embodiments consistent with the present disclosure and, together with the description, serve to explain the principles of the present disclosure.
Fig. 1 is a schematic diagram of an implementation environment involved in various embodiments of the present disclosure;
Fig. 2 is a flow chart showing a method for sending information in a voice service, according to an exemplary embodiment;
Fig. 3A is a flow chart showing a method for sending information in a voice service, according to another exemplary embodiment;
Fig. 3B is a schematic diagram of an interface for receiving and storing user personal information involved in the embodiments of the present disclosure;
Fig. 3C is a schematic diagram of a service menu involved in the embodiments of the present disclosure;
Fig. 3D is a schematic diagram of an interface for inputting user personal information involved in the embodiments of the present disclosure;
Fig. 4 is a block diagram showing a device for sending information in a voice service, according to an exemplary embodiment;
Fig. 5 is a block diagram showing a device for sending information in a voice service, according to another exemplary embodiment; and
Fig. 6 is a block diagram showing a device, according to an exemplary embodiment.

Specific embodiments in this disclosure have been shown by way of the foregoing drawings and will be described in detail hereinafter. The drawings and literal descriptions are not intended to limit the scope of the inventive concepts of this disclosure in any manner. Rather, they are provided to illustrate the inventive concepts of this disclosure to those skilled in the art with reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

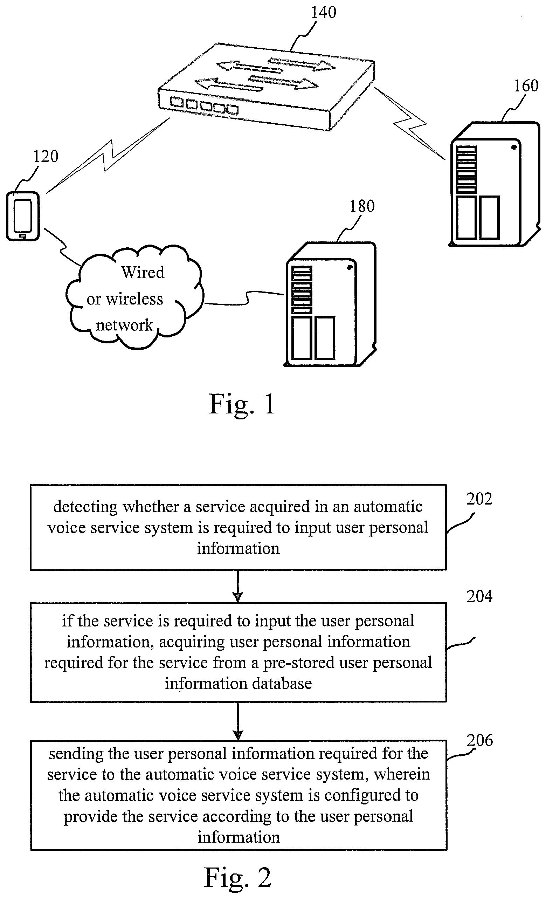

Fig. 1 is a schematic diagram of an implementation environment involved in various embodiments of the present disclosure. The implementation environment includes a terminal 120, an exchanger 140 and an automatic voice service equipment 160.

The terminal 120 includes a communication component configured to communicate with other equipments in a wired or wireless manner. The terminal 120 may be a telephone set, a cell phone or a tablet PC or the like.

The terminal 120 may be connected to the exchanger 140 in a wired or wireless manner.

The exchanger 140 is configured to build a communication connection between the terminal 120 and the automatic voice service equipment 160, to achieve information exchange between the terminal 120 and the automatic voice service equipment 160.

The exchanger 140 may be connected to the automatic voice service equipment 160 in a wired or wireless manner.

The automatic voice service equipment 160 is installed with an automatic voice service system. The automatic voice service equipment 160 may be a terminal apparatus, a server, a server cluster composed of several servers, or a cloud computing service center.

Alternatively, the implementation environment may further include a server 180 which is connected to the terminal 120 via a wired network or a wireless network.

The server 180 may be a server, a server cluster composed of several servers, or a cloud computing service center.

Fig. 2 is a flow chart showing a method for sending information in a voice service, according to an exemplary embodiment. The present embodiment illustrates the method for sending information as to be used in a terminal in the implementation environment shown in Fig. 1. The method for sending information may include the following steps.

In step 202, whether a service acquired in an automatic voice service system is required to input user personal information is detected.

In step 204, if the service is required to input the user personal information, the user personal information required for the service is acquired from a pre-stored user personal information database.

In step 206, the user personal information required for the service is sent to the automatic voice service system, wherein the automatic voice service system is configured to provide the service according to the user personal information.

In conclusion, in the method for sending information in the voice service provided by the present embodiment, by detecting whether the service acquired in the automatic voice service system is required to input the user personal information; acquiring the user personal information required for the service from the pre-stored user personal information database, if the service is required to input the user personal information; and sending the user personal information required for the service to the automatic voice service system, the problem in the related art that the automatic voice service needs to consume a great deal of time and resources while the user personal information is input is solved. Compared to that the user personal information needs to be manually input by the user in the related art, the present embodiment acquires the user personal information required for the service from the pre-stored user personal information database, thus saving the time taken for manually inputting the user personal information by the user, avoiding the errors that might occur when the user personal information is manually input by the user, increasing the efficiency for inputting the user personal information sufficiently, and saving the time and resources consumed while the automatic voice service is acquired.

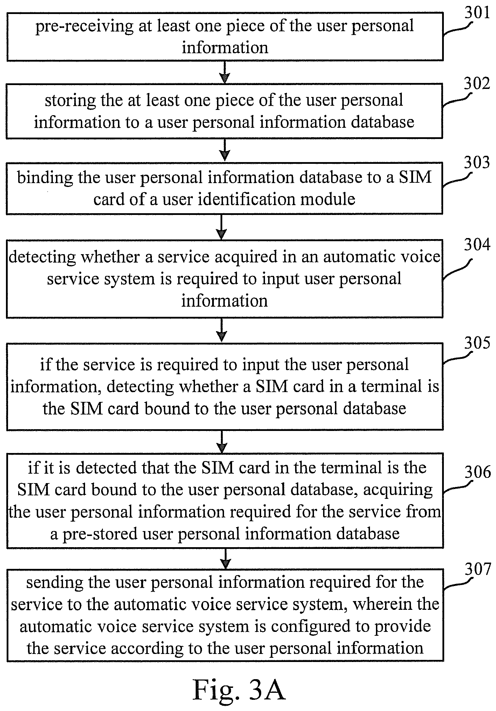

Fig. 3A is a flow chart showing a method for sending information in a voice service, according to another exemplary embodiment. The present embodiment illustrates the method for sending information as to be used in a terminal in the implementation environment shown in Fig. 1. The method for sending information may include the following steps.

In step 301, at least one piece of the user personal information is pre-received.

The terminal pre-receives at least one piece of the user personal information. The user personal information refers to the information which is required to be input from a user by an automatic voice service system when the user acquires an automatic voice service. For example, the user personal information includes a certificate number, a cell phone number, various types of card numbers, or various types of account numbers.

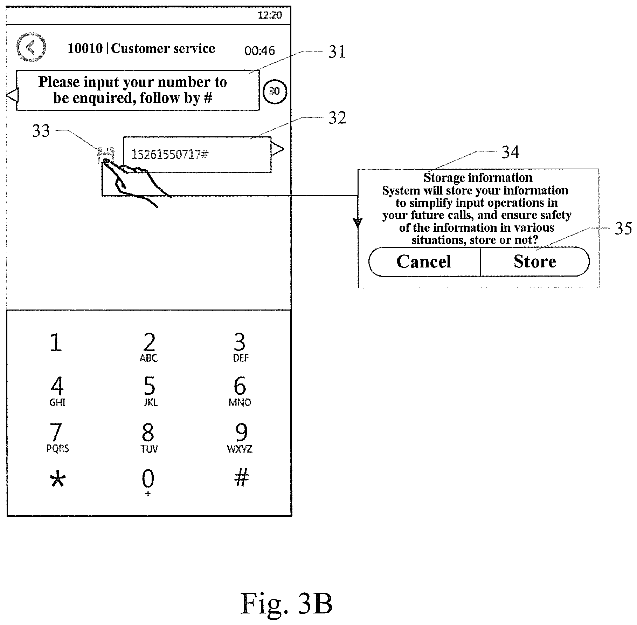

In addition, the terminal may receive the user personal information in the following possible ways: the terminal receives at least one piece of the user personal information input by the user on a personal information input page, and/or the terminal receives at least one piece of the user personal information sent by other apparatuses. Referring to Fig. 3B, Fig. 3B shows a schematic diagram of an interface for receiving and storing the user personal information involved in the present embodiment. It is assumed that the user calls a service number of a telecommunication operator to enquire his/her account, the terminal displays a service menu 31 configured to prompt the user to input a number to be enquired, and the user inputs the number to be enquired such as the user's own cell phone number "15261550717" in an input box 32 according to the prompt of the service menu 31, and then the terminal receives the cell phone number input by the user in the input box 32, wherein the cell phone number is a piece of the user personal information.

In step 302, the at least one piece of the user personal information is stored to a user personal information database.

The terminal stores the at least one piece of the user personal information to the user personal information database. The user personal information database includes n pieces of the user personal information, and n≥1.

Since the user personal information usually is relatively sensitive information such as the certificate number, the cell phone number, the various types of card numbers, and the various types of account numbers, in order to guarantee the safety of the user personal information, this step may include the following sub-steps.

Firstly, the user personal information is encrypted for each piece of the received user personal information.

The terminal encrypts the user personal information for each piece of the received user personal information. For example, the user personal information may be encrypted by an encryption algorithm such as DES (Data Encryption Standard), AES (Advanced Encryption Standard) or MD5 (Message-Digest Algorithm 5).

Secondly, the encrypted user personal information is stored to the user personal information database.

The terminal stores the encrypted user personal information to the user personal information database. The user personal information is encrypted and then stored, such that plaintext exposure after the leakage of the user personal information that might be caused by procedural problems inside the terminal or operational problems of the user may be avoided, and the safety of the user personal information is guaranteed.

After the terminal receives the user personal information input by the user on the personal information input page, the terminal may initiatively ask whether the user needs to store the user personal information, or may ask whether the user needs to store the user personal information after the user triggers a predetermined button. Referring to Fig. 3B, it is assumed that after inputting the cell phone number on the personal information input page, the user clicks a "store" button 33, and the terminal may display a storage confirming page 34 in a form of pop-up box, and then the terminal stores the cell phone number input by the user after the user clicks a "confirm" button 35.

In addition, the user personal information database may be stored in the following possible positions: the user personal information database is locally stored, or the user personal information database is stored in a server with a user service account number, or the user personal information database is not only locally stored, but also stored in the server with the user service account number, both of which are mutually synchronized. Wherein the user service account number refers to an account number pre-registered by the user to obtain use authority of the server, the user may login into the server to store, view, download information or perform other operations with the user service account number.

In step 303, the user personal information database is bound to a SIM card of a user identification module.

The terminal binds the user personal information database to the SIM (Subscriber Identity Module) card, and stores the binding relationship.

Alternatively, when the user personal information database is stored in the server, the terminal may send the binding relationship to the server, and the server receives and stores the binding relationship, such that the server may validate a SIM card in the terminal according to the binding relationship, if the terminal needs to get the user personal information from the server in the follow-up process.

By the step 301 to the step 302, the terminal and/or the server pre-stores the user personal information database, and the user personal information database includes n pieces of the user personal information, and n≥1. Alternatively, by the step 303, the terminal and/or the server further store the binding relationship between the user personal information database and the SIM card. When the user calls a service number of an automatic voice service system to obtain a service using the terminal, if the automatic voice service system requires the user to provide the user personal information, it will be introduced in detail as below how the terminal acquires the user personal information according to a pre-stored user personal information database and sends the user personal information required for the automatic voice service system to the automatic voice service system.

In step 304, whether the service acquired in the automatic voice service system is required to input the user personal information is detected.

When the user calls the service number of the automatic voice service system to obtain the service by using the terminal, the terminal detects whether the service acquired in the automatic voice service system is required to input the user personal information. The user personal information may be input before the service number is dialed, or may be input after the service number is dialed.

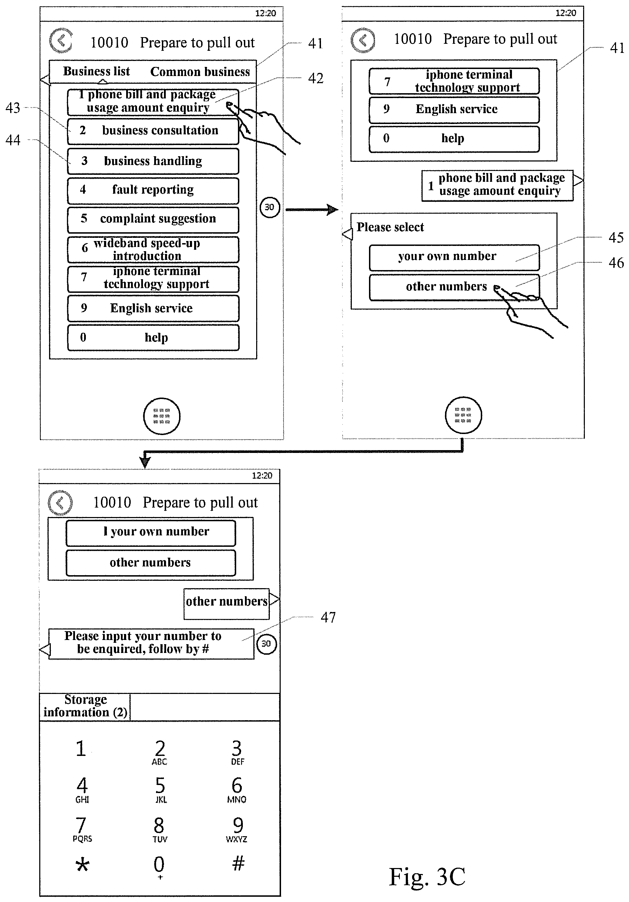

Firstly, if the user personal information is input before the service number is dialed, the step 304 may include the following sub-steps.
1. Before the service number of the automatic voice service system is dialed, at least one service corresponding to the service number is displayed.
   Before the service number of the automatic voice service system is dialed, the terminal displays at least one service corresponding to the service number. The terminal pre-stores the menu correspondence relationships between different service numbers and different service menus. The service menu is a visual service menu which includes at least one menu item and each menu item corresponds to at least one service.
   Referring to Fig. 3C, Fig. 3C shows a schematic diagram of a service menu involved in the present embodiment (taking a situation that before the service number is dialed for example). It is assumed that the user calls service number 10010 of a telecommunication operator, and before the service number is dialed, the terminal acquires a service menu 41 corresponding to the service number from the pre-stored menu correspondence relationships, and then displays the service menu 41. As can be seen from Fig. 3C, the service menu 41 includes several menu items such as a "usage amount enquiry of phone bill and package" menu item 42, a "business enquiry" menu item 43, a "business handling" menu item 44, and each menu item corresponds to at least one service. For example, after the user clicks the "usage amount enquiry of phone bill and package" menu item 42, the terminal displays an enquiry service 45 of its own number and an enquiry service 46 of other numbers.
2. A selection signal corresponding to the at least one service is received.
   The terminal receives the selection signal corresponding to the at least one service. For example, the user selects the enquiry service 46 of the other numbers.
3. A service menu corresponding to the selected service is acquired.
   The terminal acquires the service menu corresponding to the selected service. The service menu corresponding to the selected service usually is a portion of the service menu corresponding to the service number. Referring to Fig. 3C, contents of a service menu 47 corresponding to the enquiry service 46 of the other numbers may be shown in Fig. 3C, the service menu 47 is configured to prompt the user to input a number to be enquired.
4. Whether the user personal information is required to be input is detected according to the service menu.

The terminal detects whether the user personal information is required to be input according to the service menu. For example, when the service menu contains sensitive words such as "input", "number", the terminal may determine the currently acquired service is required to input the user personal information.

Secondly, if the user personal information is input after the service number is dialed, the step 304 may include the following sub-steps.
1. After the service number of the automatic voice service system is dialed, at least one service corresponding to the service number is displayed.
2. A selection signal corresponding to the at least one service is received.
3. A service menu corresponding to the selected service is acquired.
4. Whether the user personal information is required to be input is detected according to the service menu.

The terminal may also detect whether the user personal information is required to be input after the service number is dialed, its implementation process is the same as or similar to the detection before the service number is dialed, which is not to be described repeatedly here.

Alternatively, if the terminal detects whether the user personal information is required to be input after the service number is dialed, the terminal may also identify by using the voice identification technology a voice prompt played by the automatic voice service system, and detect whether the user personal information is required to be input according to an identification result of the voice prompt. For example, when the automatic voice service system plays voice prompt "please input your number to be enquired, which is ended by #", the terminal identifies the sensitive words such as "input", "number" by using the voice identification technology, such that it is determined that the user personal information is required to be input.

In step 305, if the service is required to input the user personal information, whether the SIM card in the terminal is the SIM card bound to the user personal database is detected.

If the service is required to input the user personal information, the terminal detects whether the SIM card in the terminal is the SIM card bound to the user personal database. When the binding relationship between the user personal information database and the SIM card is stored in the terminal, the terminal detects whether the SIM card bound to the user personal information database locally pre-stored is the same as the currently built-in SIM card in the terminal, and if they are the same, step 306 is performed. When the binding relationship between the user personal information database and the SIM card is stored in a server, the terminal sends related information of the currently built-in SIM card in the terminal to the server, and the server detects whether the user personal information database bound to the SIM card is pre-stored according to the received related information of the SIM card, and if it is detected that the user personal information database bound to the SIM card is pre-stored, a validation passing instruction is sent to the terminal, the validation passing instruction is used to instruct the terminal to perform the step 306.

By binding the user personal information database and the SIM card, and validating the SIM card in the terminal, on one hand, the user personal information database pre-stored by the user in the terminal and/or the server may be avoided from being read while the terminal is used by other people. For example, if the user needs to give the terminal to other users for use, the user only needs to pull out the SIM card to keep it by his/her own, and the other users can not acquire the user personal information database previously stored by the user in the terminal and/or server. On the other hand, if the user pre-stores the user personal information database and the binding relationship between the user personal information database and the SIM card in the server, when the user changes the terminal but still uses the SIM card, the user may acquire the pre-stored user personal information database from the server through the SIM card, and may also download the user personal information database pre-stored in the server to the changed terminal, such that loss and repetitive storage of information are avoided.

In step 306, if it is detected that the SIM card in the terminal is the SIM card bound to the user personal database, the user personal information required for the service is acquired from the pre-stored user personal information database.

If it is detected that the SIM card in the terminal is the SIM card bound to the user personal database, the terminal acquires the user personal information required for the service from the pre-stored user personal information database. When the user personal information database is locally stored, the terminal directly acquires the user personal information required for the service from the locally pre-stored user personal information database, and when the user personal information database is not locally stored, the terminal may acquire the user personal information required for the service from the user personal information database pre-stored in the server with the user server account number.

In a possible implementation, this step may include the following sub-steps.

Firstly, when the service menu corresponding to the selected service includes an information type of the user personal information required for the service, m pieces of the user personal information that match the information type are acquired from the pre-stored user personal information database, and 1≤m≤n.

The information type includes a certificate number, a cell phone number, a bank card number and a game account number or the like. In storing the received user personal information to the user personal information database, the terminal may classify and store the received user personal information according to the information type of the user personal information. Thus, when the user personal information required for the service needs to be acquired from the user personal information database, the user personal information that is matched may be filtered from the user personal information database according to the information type of the user personal information required for the service, thus avoiding the inconvenience for the user's follow-up selection when the user personal information database is stored with a great deal of the user personal information.

Secondly, the m pieces of the user personal information are displayed.

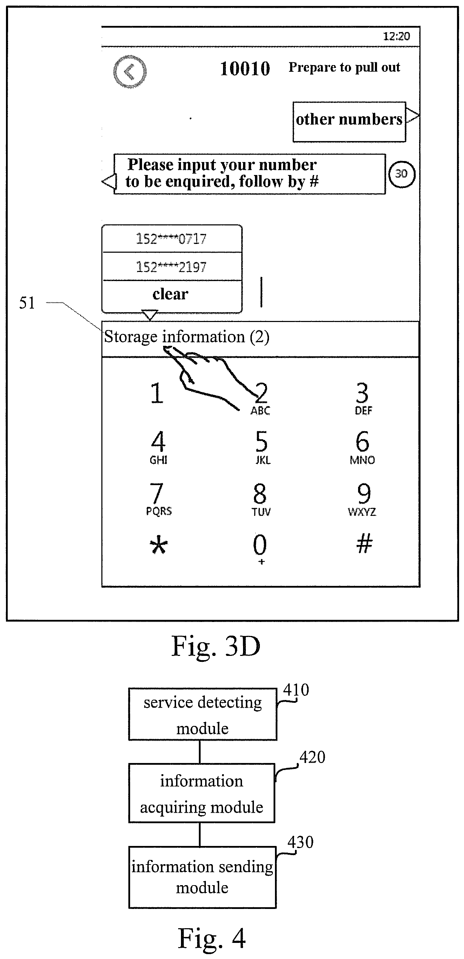

The terminal displays the m pieces of the user personal information. Referring to Fig. 3D, Fig. 3D shows a schematic diagram of an interface for inputting the user personal information involved in the present embodiment. After the user clicks a "stored information" button 51, the terminal acquires the m pieces of the user personal information that match the information type from the pre-stored user personal information database according to the information type (i.e. the cell phone number) of the user personal information required for the service, as shown in Fig. 3D, two cell phone numbers 152****0717 and 152****2197, and displays the two cell phone numbers.

It is to be explained that, in order to avoid the user personal information from being viewed and stolen by others while the user personal information is input, and further guarantee the safety of the user personal information, a portion of contents of the user personal information is displayed in a hidden manner for each piece of the m pieces of the user personal information. As shown in Fig. 3D, the terminal does not display the cell phone number completely, four figures in the middle of the cell phone numbers are displayed in a hidden way. Thus, the user's selection is not interfered while the safety of the user personal information is guaranteed.

Thirdly, selection signals corresponding to the m pieces of the user personal information are received.

The user may select the user personal information required for the service from the m pieces of the user personal information displayed by the terminal, such that not only time is saved but also accuracy while information is input is guaranteed, compared to manually inputting the personal information word by word. Correspondingly, the terminal receives the selection signals corresponding to the m pieces of the user personal information.

Fourthly, the selected user personal information is used as the user personal information required for the service.

The terminal uses the selected user personal information as the user personal information required for the service.

In step 307, the user personal information required for the service is sent to the automatic voice service system, wherein the automatic voice service system is configured to provide the service according to the user personal information.

After acquiring the user personal information required for the service from the pre-stored user personal information database, the terminal sends the user personal information required for the service to the automatic voice service system. The automatic voice service system is configured to provide the service according to the user personal information. Referring to Fig. 3D, it is assumed that the user selects a cell phone number 152****2197, the terminal sends this cell phone number to the automatic voice service system, correspondingly, the automatic voice service system receives this cell phone number, and acquires phone bill and package usage condition corresponding to the cell phone number, and then sends the phone bill and package usage condition to the terminal in a form of voice or text or the like.

In a possible implementation, this step may include the following sub-steps.

Firstly, at least one dual-tone multiple-frequency (DTMF) signal corresponding to the user personal information required for the service is generated.

The terminal generates at least one DTMF (dual-tone multiple-frequency) signal corresponding to the user personal information required for the service. The DTMF signal is a composite signal that is composed by a high-frequency signal superposed with a low-frequency signal. For example, a high-frequency signal group includes 4 different high-frequency signals, a low-frequency signal group includes 4 different low-frequency signals, and 16 different composite signals may be obtained by respectively selecting one signal from each of the high-frequency signal group and the low-frequency signal group to be composed. Each type of the composite signal represents one button number. For example, button number "1" may be represented by a composite signal which is composed by a high-frequency signal of 1209Hz superposed with a low-frequency signal of 697Hz.

Secondly, the at least one DTMF signal is sent to the automatic voice service system.

The terminal sends the at least one DTMF signal to the automatic voice service system. Correspondingly, the automatic voice service system receives and interprets the DTMF signal sent by the terminal, obtains the user personal information required for the service, and provides the service according to the user personal information.

It is to be explained, in order to further guarantee the safety of the user personal information, when the user performs operations of viewing, modifying and acquiring the user personal information in the user personal information database using the terminal or the like, the method for sending information provided by the present embodiment may also include the following steps.
1. Whether a current user has an authority to operate the user personal information database is detected.
   The terminal detects whether the current user has the authority to operate the user personal information database. For example, the terminal may detect the authority of the user who is currently using the terminal with a numeric password, a gesture password, a trajectory password and the like pre-set by the user. For another example, the terminal may also detect the authority of the user who is currently using the terminal with the feature information such as a fingerprint or an iris of the user.
   The step of detecting the authority may be performed before any one of the operations of viewing, modifying and acquiring the user personal information in the user personal information database. For example, in the step 306, before displaying the m pieces of the user personal information, the terminal may detect the authority of the current user. The terminal may display the m pieces of the user personal information after the current user inputs correct password, or may display the m pieces of the user personal information after the fingerprint of the current user is validated to meet the requirement.
2. If it is detected that the current user has the authority to operate the user personal information database, a corresponding operation is performed according to a received information operating instruction.

If it is detected that the current user has the authority to operate the user personal information database, the terminal performs the corresponding operation according to the received information operating instruction. The information operating instruction includes any one of an information viewing instruction, an information modifying instruction and an information acquiring instruction.

In conclusion, in the method for sending information in the voice service provided by the present embodiment, by detecting whether the service acquired in the automatic voice service system is required to input the user personal information; acquiring the user personal information required for the service from the pre-stored user personal information database, if the service is required to input the user personal information; and sending the user personal information required for the service to the automatic voice service system, the problem in the related art that the automatic voice service needs to consume a great deal of time and resources while the user personal information is input is solved. Compared to that the user personal information needs to be manually input by the user in the related art, the present embodiment acquires the user personal information required for the service from the pre-stored user personal information database, thus saving the time taken for manually inputting the user personal information by the user, avoiding the errors that might occur when the user personal information is manually input by the user, increasing the efficiency for inputting the user personal information sufficiently, and saving the time and resources consumed while the automatic voice service is acquired.

In addition, by encrypting and then storing the received user personal information, plaintext exposure after leakage of the user personal information that might be caused by procedural problems inside the terminal or operational problems of the user may be avoided, and the safety of the user personal information is guaranteed. By binding the user personal information database and the SIM card, and validating the SIM card in the terminal, on one hand, the user personal information database pre-stored by the user in the terminal and/or the server may be avoided from being read while the terminal is used by other people. On the other hand, when the user changes the terminal but still uses the SIM card, the user may easily acquire the previously stored user personal information database from the server, such that loss and repetitive storage of information are avoided. By displaying a portion of contents of the acquired user personal information in a hidden manner, the user personal information is avoided from being viewed and stolen by others while the user personal information is input, and the safety of the user personal information is further guaranteed.

Embodiments of the device of the present disclosure are disclosed hereinafter, which may be configured to carry out the embodiments of the method of the present disclosure. For details that are not disclosed in the embodiments of the device of the present disclosure, the embodiments of the method of the present disclosure are referred.

Fig. 4 is a block diagram showing a device for sending information in a voice service, according to an exemplary embodiment. The device for sending information may be implemented to be all or a part of the terminal by software, hardware or a combination thereof. The device for sending device may include a service detecting module 410, an information acquiring module 420 and an information sending module 430.

The service detecting module 410 is configured to detect whether a service acquired in an automatic voice service system is required to input user personal information.

The information acquiring module 420 is configured to acquire the user personal information required for the service from a pre-stored user personal information database, if the service is required to input the user personal information.

The information sending module 430 is configured to send the user personal information required for the service to the automatic voice service system, wherein the automatic voice service system is configured to provide the service according to the user personal information.

In conclusion, in the device for sending information in the voice service provided by the present embodiment, by detecting whether the service acquired in the automatic voice service system is required to input the user personal information; acquiring the user personal information required for the service from the pre-stored user personal information database, if the service is required to input the user personal information; and sending the user personal information required for the service to the automatic voice service system, the problem in the related art that the automatic voice service needs to consume a great deal of time and resources while the user personal information is input is solved. Compared to that the user personal information needs to be manually input by the user in the related art, the present embodiment acquires the user personal information required for the service from the pre-stored user personal information database, thus saving the time taken for manually inputting the user personal information by the user, avoiding the errors that might occur when the user personal information is manually input by the user, increasing the efficiency for inputting the user personal information sufficiently, and saving the time and resources consumed while the automatic voice service is acquired.

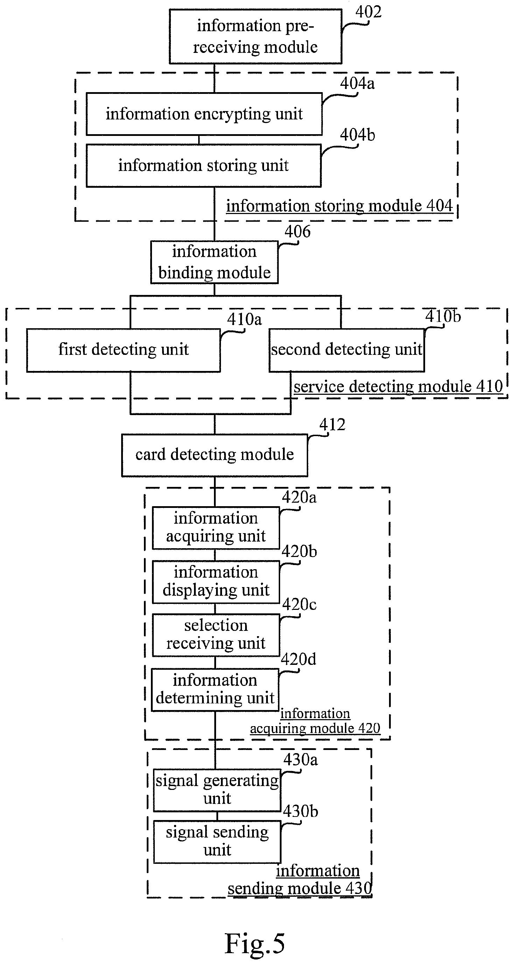

Fig. 5 is a block diagram showing a device for sending information in a voice service, according to another exemplary embodiment. The device for sending information may be implemented to be all or a part of the terminal by software, hardware or a combination thereof. The device for sending device may include a service detecting module 410, an information acquiring module 420 and an information sending module 430.

The service detecting module 410 is configured to detect whether a service acquired in an automatic voice service system is required to input user personal information.

The service detecting module 410 includes a first detecting unit 410a or a second detecting unit 410b.

The first detecting unit 410a is configured to, before a service number of the automatic voice service system is dialed, display at least one service corresponding to the service number, receive a selection signal corresponding to the at least one service, acquire a service menu corresponding to the selected service, and detect whether the user personal information is required to be input according to the service menu.

The second detecting unit 410b is configured to, after a service number of the automatic voice service system is dialed, display at least one service corresponding to the service number, receive a selection signal corresponding to the at least one service, acquire a service menu corresponding to the selected service, and detect whether the user personal information is required to be input according to the service menu.

The information acquiring module 420 is configured to acquire the user personal information required for the service from a pre-stored user personal information database, if the service is required to input the user personal information.

The information acquiring module 420 includes an information acquiring unit 420a, an information displaying unit 420b, a selecting receiving unit 420c and an information determining unit 420d.

The information acquiring unit 420a is configured to, when the service menu includes an information type of the user personal information required for the service, acquire m pieces of the user personal information that match the information type from the pre-stored user personal information database, wherein the user personal information database includes n pieces of the user personal information, 1≤m≤n, and m and n are positive integers.

The information displaying unit 420b is configured to display the m pieces of the user personal information.

Alternatively, the information displaying unit 420b is further configured to display a portion of contents of the user personal information in a hidden manner for each piece of the m pieces of the user personal information.

The selecting receiving unit 420c is configured to receive selection signals corresponding to the m pieces of the user personal information.

The information determining unit 420d is configured to use the selected user personal information as the user personal information required for the service.

The information sending module 430 is configured to send the user personal information required for the service to the automatic voice service system, wherein the automatic voice service system is configured to provide the service according to the user personal information.

The information sending module 430 includes a signal generating unit 430a and a signal sending unit 430b.

The signal generating unit 430a is configured to generate at least one dual-tone multiple-frequency (DTMF) signal corresponding to the user personal information required for the service.

The signal sending unit 430b is configured to send the at least one DTMF signal to the automatic voice service system.

Alternatively, the device further includes an information pre-receiving module 402 and an information storing module 404.

The information pre-receiving module 402 is configured to pre-receive at least one piece of the user personal information.

The information storing module 404 is configured to store the at least one piece of the user personal information to the user personal information database.

The user personal information database is locally stored, or the user personal information database is stored in a server with a user service account number, or the user personal information database is not only locally stored, but also stored in the server with the user service account number, both of which are mutually synchronized.

Alternatively, the information storing module 404 includes an information encrypting unit 404a and an information storing unit 404b.

The information encrypting unit 404a is configured to encrypt the user personal information for each piece of the received user personal information.

The information storing unit 404b is configured to store the encrypted user personal information to the user personal information database.

Alternatively, the device further includes an information binding module 406.

The information binding module 406 is configured to bind the user personal information database to a SIM card of a user identification module.

Alternatively, the device further includes a card detecting module 412.

The card detecting module 412 is configured to detect whether a SIM card in a terminal is the SIM card bound to the user personal database.

The information acquiring module 420 is further configured to, if it is detected that the SIM card in the terminal is the SIM card bound to the user personal database, perform the step of acquiring the user personal information required for the service from the pre-stored user personal information database.

Alternatively, the device further includes an authority detecting module and an operation performing module.

The authority detecting module is configured to detect whether a current user has an authority to operate the user personal information database.

The operation performing module is configured to, if it is detected that the current user has the authority to operate the user personal information database, perform a corresponding operation according to a received information operating instruction, wherein the information operating instruction includes any one of an information viewing instruction, an information modifying instruction and an information acquiring instruction.

In conclusion, in the device for sending information in the voice service provided by the present embodiment, by detecting whether the service acquired in the automatic voice service system is required to input the user personal information; acquiring the user personal information required for the service from the pre-stored user personal information database, if the service is required to input the user personal information; and sending the user personal information required for the service to the automatic voice service system, the problem in the related art that the automatic voice service needs to consume a great deal of time and resources while the user personal information is input is solved. Compared to that the user personal information needs to be manually input by the user in the related art, the present embodiment acquires the user personal information required for the service from the pre-stored user personal information database, thus saving the time taken for manually inputting the user personal information by the user is saved, avoiding the errors that might occur when the user personal information is manually input by the user, increasing the efficiency for inputting the user personal information sufficiently, and saving the time and resources consumed while the automatic voice service is acquired.

In addition, by encrypting and then storing the received user personal information, plaintext exposure after leakage of the user personal information that might be caused by procedural problems inside the terminal or operational problems of the user may be avoided, and the safety of the user personal information is guaranteed. By binding the user personal information database and the SIM card, and by validating the SIM card in the terminal, on one hand, the user personal information database pre-stored by the user in the terminal and/or the server may be avoided from being read while the terminal is used by other people. On the other hand, when the user changes the terminal but still uses the SIM card, the user may easily acquire the previously stored user personal information database from the server, such that loss and repetitive storage of information are avoided. By displaying a portion of contents of the acquired user personal information in a hidden manner, the user personal information is avoided from being viewed and stolen by others while the user personal information is input, and the safety of the user personal information is further guaranteed.

With respect to the devices in the above embodiments, the specific manners for performing operations for individual modules therein have been described in detail in the embodiments regarding the method for sending information in the voice service, which will not be elaborated herein.

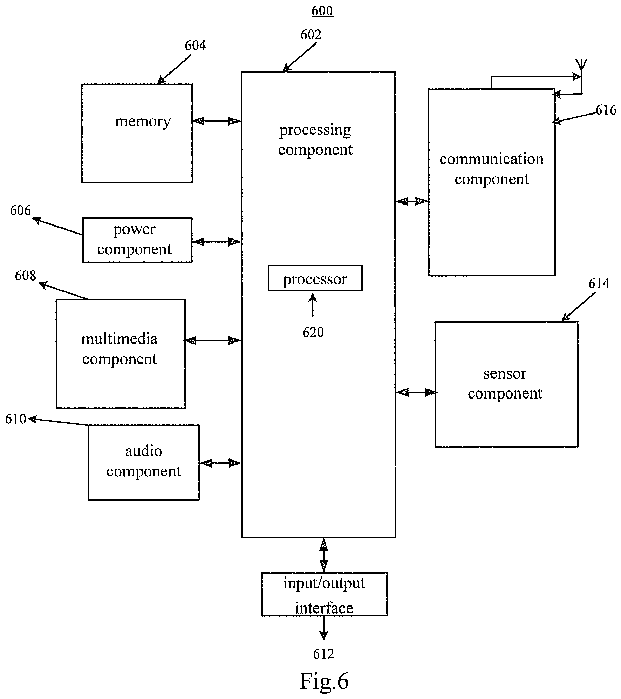

Fig. 6 is a block diagram showing a device 600 for sending information in a voice service, according to an exemplary embodiment. For example, the device 600 may be a mobile phone, a computer, a digital broadcast terminal, a messaging device, a gaming console, a tablet, a medical device, exercise equipment, a personal digital assistant and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 usually controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any application or method operated on the device 600, contact data, phonebook data, messages, pictures, videos, etc. The memory 604 may be implemented using any type of volatile or non-volatile memory device or combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 608 includes a front camera and/or a rear camera. The front camera and/or the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ("MIC") configured to receive an external audio signal when the device 600 is in an operation mode, such as a call mode, a recording mode, and a voice identification mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, a button, and the like. The button may include, but not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keyboard, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the method for sending information in the voice service shown in Fig. 2 or Fig. 3A.

In exemplary embodiments, there is also provided a non-transitory computer readable storage medium including instructions, such as included in the memory 604, executable by the processor 620 in the device 600, for performing the method for sending information in the voice service shown in Fig. 2 or Fig. 3A. For example, the non-transitory computer-readable storage medium may be a ROM, a random access memory (RAM), a CD-ROM, a magnetic tape, a floppy disc, an optical data storage device, and the like.

A non-transitory computer readable storage medium, when instructions in the storage medium are executed by the processor of the device 600, the device 600 can execute the method for sending information in the voice service shown in Fig. 2 or Fig. 3A.

After considering this description and carrying out the embodiments disclosed herein, those skilled in the art may easily anticipate other implementation aspects of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure. The description and embodiments are only exemplary, and the real range of the present disclosure is defined by the following claims.

It should be understood that the present disclosure is not limited to precise structures that are described above and shown in the accompanying drawings, and may be modified and changed without departing from the range of the present disclosure. The scope of the present disclosure is only defined by the appended claims.

## Claims

1. A method for sending information in a voice service, the method comprising:
pre-receiving (301) at least one piece of the user personal information;
storing (302) the at least one piece of the user personal information to the user personal information database, wherein
the user personal information database is locally stored, or
the user personal information database is stored in a server with a user service account number, or
the user personal information database is not only locally stored, but also stored in the server with the user service account number, both of which are mutually synchronized; the method further comprises:
detecting (202) whether a service acquired in an automatic voice service system is required to input user personal information;
if the service is required to input the user personal information, acquiring (204) the user personal information required for the service from a pre-stored user personal information database; and
sending (206) the user personal information required for the service to the automatic voice service system, wherein the automatic voice service system is configured to provide the service according to the user personal information;
the method **characterized by** binding (303) the user personal information database to a SIM card of a user identification module.

2. The method according to claim 1, **characterized in that**, the detecting whether the service acquired in the automatic voice service system is required to input the user personal information includes:
before a service number of the automatic voice service system is dialed, displaying at least one service corresponding to the service number, receiving a selection signal corresponding to the at least one service, acquiring a service menu corresponding to the selected service, and detecting whether the user personal information is required to be input according to the service menu; or
after a service number of the automatic voice service system is dialed, displaying at least one service corresponding to the service number, receiving a selection signal corresponding to the at least one service, acquiring a service menu corresponding to the selected service, and detecting whether the user personal information is required to be input according to the service menu.

3. The method according to claim 2, **characterized in that**, the acquiring the user personal information required for the service from the pre-stored user personal information database includes:
when the service menu includes an information type of the user personal information required for the service, acquiring m pieces of the user personal information that match the information type from the pre-stored user personal information database, wherein the user personal information database includes n pieces of the user personal information, 1≤m≤n, and m and n are positive integers;
displaying the m pieces of the user personal information;
receiving selection signals corresponding to the m pieces of the user personal information; and
using the selected user personal information as the user personal information required for the service.

4. The method according to claim 3, **characterized in that**, the displaying the m pieces of the user personal information includes:
displaying a portion of contents of the user personal information in a hidden manner for each piece of the m pieces of the user personal information.

5. The method according to any one of claims 1 to 4, **characterized in that**, the storing the at least one piece of the user personal information to the user personal information database includes:
encrypting the user personal information for every piece of the received user personal information; and
storing the encrypted user personal information to the user personal information database.

6. The method according to any one of claims 1 to 5, **characterized in that**, the method further comprises:
detecting (305) whether a SIM card in a terminal is the SIM card bound to the user personal database; and
if it is detected that the SIM card in the terminal is the SIM card bound to the user personal database, performing the step (306) of acquiring the user personal information required for the service from the pre-stored user personal information database.

7. The method according to any one of claims 1 to 8, **characterized in that**, the method further comprises:
detecting whether a current user has an authority to operate the user personal information database; and
if it is detected that the current user has the authority to operate the user personal information database, performing a corresponding operation according to a received information operating instruction, wherein the information operating instruction includes any one of an information viewing instruction, an information modifying instruction and an information acquiring instruction.

8. The method according to any one of claims 1 to 7, **characterized in that**, the sending the user personal information required for the service to the automatic voice service system includes:
generating at least one dual-tone multiple-frequency (DTMF) signal corresponding to the user personal information required for the service; and
sending the at least one DTMF signal to the automatic voice service system.

9. A device for sending information in a voice service, the device comprising:
an information pre-receiving module configured to pre-receive at least one piece of the user personal information;
an information storing module configured to store the at least one piece of the user personal information to the user personal information database, wherein
the user personal information database is locally stored, or
the user personal information database is stored in a server with a user service account number, or
the user personal information database is not only locally stored, but also stored in the server with the user service account number, both of which are mutually synchronized.
a service detecting module (410) configured to detect whether a service acquired in an automatic voice service system is required to input user personal information;
an information acquiring module (420) configured to acquire user personal information required for the service from a pre-stored user personal information database, if the service is required to input the user personal information; and
an information sending module (430) configured to send the user personal information required for the service to the automatic voice service system, wherein the automatic voice service system is configured to provide the service according to the user personal information, the device being **characterized in that** it further includes
an information binding module configured to bind the user personal information database to a SIM card of a user identification module.

10. The device according to claim 9, **characterized in that**, the service detecting module (410) includes a first detecting unit (410a) or a second detecting unit (410b), wherein
the first detecting unit is configured to, before a service number of the automatic voice service system is dialed, display at least one service corresponding to the service number, receive a selection signal corresponding to the at least one service, acquire a service menu corresponding to the selected service, and detect whether the user personal information is required to be input according to the service menu, and
the second detecting unit is configured to, after a service number of the automatic voice service system is dialed, display at least one service corresponding to the service number, receive a selection signal corresponding to the at least one service, acquire a service menu corresponding to the selected service, and detect whether the user personal information is required to be input according to the service menu.

11. The device according to claim 10, **characterized in that**, the information acquiring module includes an information acquiring unit (420a), an information displaying unit (420b), a selection receiving unit (420c) and an information determining unit (420d), wherein
the information acquiring unit is configured to, when the service menu includes an information type of the user personal information required for the service, acquire m pieces of the user personal information that match the information type from the pre-stored user personal information database, wherein the user personal information database includes n pieces of the user personal information, 1≤m≤n, and m and n are positive integers;
the information displaying unit is configured to display the m pieces of the user personal information;
the selection receiving unit is configured to receive selection signals corresponding to the m pieces of the user personal information; and
the information determining unit is configured to use the selected user personal information as the user personal information required for the service.

12. The device according to any one of claims 9 to 11 **characterized in that** it further includes:
a card detecting module configured to detect whether a SIM card in a terminal is the SIM card bound to the user personal database, wherein
the information acquiring module is further configured to, if it is detected that the SIM card in the terminal is the SIM card bound to the user personal database, perform the step of acquiring the user personal information required for the service from the pre-stored user personal information database.

13. The device according to any one of claims 9 to 12 **characterized in that**
the information storing module includes an information encrypting unit and an information storing unit, wherein
the information encrypting unit is configured to encrypt the user personal information for each piece of the received user personal information; and
the information storing unit is configured to store the encrypted user personal information to the user personal information database.

14. A computer program including instructions for executing the steps of a method for sending information in a voice service according to any one of claims 1 to 8 when said program is executed by a computer.

15. A recording medium readable by a computer and having recorded thereon a computer program including instructions for executing the steps of a method for sending information in a voice service according to any one of claims 1 to 8.

## Patentansprüche

1. Verfahren zum Senden von Informationen in einem Sprachdienst, wobei das Verfahren aufweist:
Vorempfangen (301) von mindestens einer personenbezogenen Information des Benutzers,
Speichern (302) der mindestens einen personenbezogenen Information des Benutzers in der Datenbank der personenbezogenen Informationen des Benutzers, wobei
die Datenbank der personenbezogenen Informationen des Benutzers lokal gespeichert ist oder
die Datenbank der personenbezogenen Informationen des Benutzers auf einem Server mit einer Benutzerdienst-Kontonummer gespeichert ist oder
die Datenbank der personenbezogenen Informationen des Benutzers nicht nur lokal gespeichert ist, sondern auch auf dem Server mit der Benutzerdienst-Kontonummer gespeichert ist, von denen beide wechselseitig synchronisiert werden,
wobei das Verfahren ferner aufweist:
Ermitteln (202), ob es erforderlich ist, dass ein in einem automatischen Sprachdienstsystem erfasster Dienst personenbezogene Informationen des Benutzers eingibt,
wenn es erforderlich ist, dass der Dienst die personenbezogenen Informationen des Benutzers eingibt, Erfassen (204) der personenbezogenen Informationen des Benutzers, die für den Dienst benötigt werden, aus einer vorgespeicherten Datenbank der personenbezogenen Informationen des Benutzers, und
Senden (206) der personenbezogenen Informationen des Benutzers, die für den Dienst benötigt werden, an das automatische Sprachdienstsystem, wobei das automatische Sprachdienstsystem konfiguriert ist, den Dienst gemäß der personenbezogenen Informationen des Benutzers bereitzustellen,
wobei das Verfahren **gekennzeichnet ist durch**
Binden (303) der Datenbank der personenbezogenen Informationen des Benutzers an eine SIM-Karte eines Benutzeridentifikationsmoduls.

2. Verfahren nach Anspruch 1, **dadurch gekennzeichnet, dass** das Ermitteln, ob es erforderlich ist, dass der im automatischen Sprachdienstsystem erfasste Dienst die personenbezogenen Informationen des Benutzers eingibt, umfasst:
bevor eine Dienstnummer des automatischen Sprachdienstsystems gewählt wird, Anzeigen von mindestens einem Dienst, der der Dienstnummer entspricht, Empfangen eines Auswahlsignals, das dem mindestens einen Dienst entspricht, Erfassen eines Dienstmenüs, das dem ausgewählten Dienst entspricht, und Ermitteln gemäß dem Dienstmenü, ob es erforderlich ist, dass die personenbezogenen Informationen des Benutzers eingegeben werden, oder
nachdem eine Dienstnummer des automatischen Sprachdienstsystems gewählt wird, Anzeigen von mindestens einem Dienst, der der Dienstnummer entspricht, Empfangen eines Auswahlsignals, das dem mindestens einen Dienst entspricht, Erfassen eines Dienstmenüs, das dem ausgewählten Dienst entspricht, und Ermitteln gemäß dem Dienstmenü, ob es erforderlich ist, dass die personenbezogenen Informationen des Benutzers eingegeben werden.

3. Verfahren nach Anspruch 2, **dadurch gekennzeichnet, dass** das Erfassen der personenbezogenen Informationen des Benutzers, die für den Dienst benötigt werden, aus der vorgespeicherten Datenbank der personenbezogenen Informationen des Benutzers umfasst:
wenn das Dienstmenü einen Informationstyp der personenbezogenen Informationen des Benutzers umfasst, die für den Dienst benötigt werden, Erfassen von m personenbezogenen Informationen des Benutzers, die zum Informationstyp passen, aus der vorgespeicherten Datenbank der personenbezogenen Informationen des Benutzers, wobei die Datenbank der personenbezogenen Informationen des Benutzers n personenbezogene Informationen des Benutzers umfasst, 1 ≤ m ≤ n und m und n positive ganze Zahlen sind,
Anzeigen der m personenbezogenen Informationen des Benutzers,
Empfangen von Auswahlsignalen, die den m personenbezogenen Informationen des Benutzers entsprechen, und
Verwenden der ausgewählten personenbezogenen Informationen des Benutzers als die personenbezogenen Informationen des Benutzers, die für den Dienst benötigt werden.

4. Verfahren nach Anspruch 3, **dadurch gekennzeichnet, dass** das Anzeigen der m personenbezogenen Informationen des Benutzers umfasst:
Anzeigen eines Anteils des Inhalts der personenbezogenen Informationen des Benutzers in einer verborgenen Weise für jede Information der m personenbezogenen Informationen des Benutzers.

5. Verfahren nach einem der Ansprüche 1 bis 4, **dadurch gekennzeichnet, dass** das Speichern der mindestens einen personenbezogenen Information des Benutzers in der Datenbank der personenbezogenen Informationen des Benutzers umfasst:
Verschlüsseln der personenbezogenen Informationen des Benutzers für jede Information der empfangenen personenbezogenen Informationen des Benutzers, und
Speichern der verschlüsselten personenbezogenen Informationen des Benutzers in der Datenbank der personenbezogenen Informationen des Benutzers.

6. Verfahren nach einem der Ansprüche 1 bis 5, **dadurch gekennzeichnet, dass** das Verfahren ferner aufweist:
Ermitteln (305), ob eine SIM-Karte in einem Endgerät die SIM-Karte ist, die an die personenbezogene Datenbank des Benutzers gebunden ist, und
wenn ermittelt wird, dass die SIM-Karte im Endgerät die SIM-Karte ist, die an die personenbezogene Datenbank des Benutzers gebunden ist, Ausführen des Schritts (306) zum Erfassen der personenbezogenen Informationen des Benutzers, die für den Dienst benötigt werden, aus der vorgespeicherten Datenbank der personenbezogenen Informationen des Benutzers.

7. Verfahren nach einem der Ansprüche 1 bis 8, **dadurch gekennzeichnet, dass** das Verfahren ferner aufweist:
Ermitteln, ob ein gegenwärtiger Benutzer eine Berechtigung hat, die Datenbank der personenbezogenen Informationen des Benutzers zu bearbeiten, und
wenn ermittelt wird, dass der gegenwärtige Benutzer die Berechtigung hat, die Datenbank der personenbezogenen Informationen des Benutzers zu bearbeiten, Ausführen einer entsprechenden Operation gemäß empfangener Informationsverarbeitungsanweisung, wobei die Informationsverarbeitungsanweisung irgendeine einer Informationsbetrachtungsanweisung, einer Informationsmodifikationsanweisung und einer Informationserfassungsanweisung umfasst.

8. Verfahren nach einem der Ansprüche 1 bis 7, **dadurch gekennzeichnet, dass** das Senden der personenbezogenen Informationen des Benutzers, die für den Dienst benötigt werden, an das automatische Sprachdienstsystem umfasst:
Erzeugen mindestens eines Doppeltonmehrfrequenz- (DTMF-) Signals, das den personenbezogenen Informationen des Benutzers entspricht, die für den Dienst benötigt werden, und
Senden des mindestens eines DTMF-Signals an das automatische Sprachdienstsystem.

9. Vorrichtung zum Senden von Informationen in einem Sprachdienst, wobei die Vorrichtung aufweist:
ein Informationsvorempfangsmodul, das konfiguriert ist, mindestens eine personenbezogene Information des Benutzers im Voraus zu empfangen,
ein Informationsspeichermodul, das konfiguriert ist, die mindestens eine personenbezogene Information des Benutzers in der Datenbank der personenbezogenen Informationen des Benutzers zu speichern, wobei
die Datenbank der personenbezogenen Informationen des Benutzers lokal gespeichert ist oder
die Datenbank der personenbezogenen Informationen des Benutzers auf einem Server mit einer Benutzerdienst-Kontonummer gespeichert ist oder
die Datenbank der personenbezogenen Informationen des Benutzers nicht nur lokal gespeichert ist, sondern auch auf dem Server mit der Benutzerdienst-Kontonummer gespeichert ist, von denen beide wechselseitig synchronisiert werden,
ein Dienstermittlungsmodul (410), das konfiguriert ist zu ermitteln, ob es erforderlich ist, dass ein in einem automatischen Sprachdienstsystem erfasster Dienst personenbezogene Informationen des Benutzers eingibt,
ein Informationserfassungsmodul (420), das konfiguriert ist, personenbezogene Informationen des Benutzers, die für den Dienst benötigt werden, aus einer vorgespeicherten Datenbank der personenbezogenen Informationen des Benutzers zu erfassen, wenn es erforderlich ist, dass der Dienst die personenbezogenen Informationen des Benutzers eingibt, und
ein Informationssendemodul (430), das konfiguriert ist, die personenbezogene Informationen des Benutzers, die für den Dienst benötigt werden, an das automatische Sprachdienstsystem zu senden, wobei das automatische Sprachdienstsystem konfiguriert ist, den Dienst gemäß der personenbezogenen Informationen des Benutzers bereitzustellen, wobei die Vorrichtung **dadurch gekennzeichnet ist, dass** sie ferner aufweist:
ein Informationsbindemodul, das konfiguriert ist, die Datenbank der personenbezogenen Informationen des Benutzers an eine SIM-Karte eines Benutzeridentifikationsmoduls zu binden.

10. Vorrichtung nach Anspruch 9, **dadurch gekennzeichnet, dass** das Dienstermittlungsmodul (410) eine erste Ermittlungseinheit (410a) oder eine zweite Ermittlungseinheit (410b) umfasst, wobei
die erste Ermittlungseinheit konfiguriert ist, bevor eine Dienstnummer des automatischen Sprachdienstsystems gewählt wird, mindestens einen Dienst anzuzeigen, der der Dienstnummer entspricht, ein Auswahlsignal zu empfangen, das dem mindestens einen Dienst entspricht, ein Dienstmenü zu erfassen, das dem ausgewählten Dienst entspricht, und gemäß dem Dienstmenü zu ermitteln, ob es erforderlich ist, dass die personenbezogenen Informationen des Benutzers eingegeben werden, und
die zweite Ermittlungseinheit konfiguriert ist, nachdem eine Dienstnummer des automatischen Sprachdienstsystems gewählt wird, mindestens einen Dienst anzuzeigen, der der Dienstnummer entspricht, ein Auswahlsignal zu empfangen, das dem mindestens einen Dienst entspricht, ein Dienstmenü zu erfassen, das dem ausgewählten Dienst entspricht, und gemäß dem Dienstmenü zu ermitteln, ob es erforderlich ist, dass die personenbezogenen Informationen des Benutzers eingegeben werden.

11. Vorrichtung nach Anspruch 10, **dadurch gekennzeichnet, dass** das Informationserfassungsmodul eine Informationserfassungseinheit (420a), eine Informationsanzeigeeinheit (420b), eine Auswahlempfangseinheit (420c) und eine Informationsbestimmungseinheit (420d) umfasst, wobei
die Informationserfassungseinheit konfiguriert ist, wenn das Dienstmenü einen Informationstyp der personenbezogenen Informationen des Benutzers umfasst, die für den Dienst benötigt werden, m personenbezogene Informationen des Benutzers, die zum Informationstyp passen, aus der vorgespeicherten Datenbank der personenbezogenen Informationen des Benutzers zu erfassen, wobei die Datenbank der personenbezogenen Informationen des Benutzers n personenbezogene Informationen des Benutzers umfasst, 1 ≤ m ≤ n, und m und n positive ganze Zahlen sind,
die Informationsanzeigeeinheit konfiguriert ist, die m personenbezogenen Informationen des Benutzers anzuzeigen,
die Auswahlempfangseinheit konfiguriert ist, Auswahlsignale zu empfangen, die den m personenbezogenen Informationen des Benutzers entsprechen, und
die Informationsbestimmungseinheit konfiguriert ist, die ausgewählten personenbezogenen Informationen des Benutzers als die personenbezogenen Informationen des Benutzers zu verwenden, die für den Dienst benötigt werden.

12. Vorrichtung nach einem der Ansprüche 9 bis 11, **dadurch gekennzeichnet, dass** sie ferner aufweist:
einen Kartenermittlungsmodul, das konfiguriert ist, zu ermitteln, ob eine SIM-Karte in einem Endgerät die SIM-Karte ist, die an die personenbezogene Datenbank des Benutzers gebunden ist, wobei
das Informationserfassungsmodul ferner konfiguriert ist, wenn ermittelt wird, dass die SIM-Karte im Endgerät die SIM-Karte ist, die an die personenbezogene Datenbank des Benutzers gebunden ist, den Schritt zum Erfassen der personenbezogenen Informationen des Benutzers, die für den Dienst benötigt werden, aus der vorgespeicherten Datenbank der personenbezogenen Informationen des Benutzers auszuführen.

13. Vorrichtung nach einem der Ansprüche 9 bis 12, **dadurch gekennzeichnet, dass** das Informationsspeichermodul eine Informationsverschlüsselungseinheit und an Informationsspeichereinheit umfasst, wobei
die Informationsverschlüsselungseinheit konfiguriert ist, die personenbezogenen Informationen des Benutzers für jede Information der empfangenen personenbezogenen Informationen des Benutzers zu verschlüsseln, und
die Informationsspeichereinheit konfiguriert ist, die verschlüsselten personenbezogenen Informationen des Benutzers in der Datenbank der personenbezogenen Informationen des Benutzers zu speichern.

14. Computerprogramm, das Anweisungen zum Ausführen der Schritte eines Verfahrens zum Senden von Informationen in einen Sprachdienst nach einem der Ansprüche 1 bis 8 umfasst, wenn das Programm durch einen Computer ausgeführt wird.

15. Aufzeichnungsmedium, das durch einen Computer lesbar ist und ein darauf aufgezeichnetes Computerprogramm aufweist, das Anweisungen zum Ausführen der Schritte eines Verfahrens zum Senden von Informationen in einen Sprachdienst nach einem der Ansprüche 1 bis 8 umfasst.

## Revendications

1. Procédé pour envoyer des informations dans un service vocal, le procédé comprenant :
la pré-réception (301) d'au moins un élément des informations personnelles d'utilisateur ;
le stockage (302) du au moins un élément des informations personnelles d'utilisateur dans la base de données d'informations personnelles d'utilisateur, où
la base de données d'informations personnelles d'utilisateur est stockée localement, ou
la base de données d'informations personnelles d'utilisateur est stockée dans un serveur avec un numéro de compte de service d'utilisateur, ou
la base de données d'informations personnelles d'utilisateur est non seulement stockée localement, mais est également stockée dans le serveur avec le numéro de compte de service d'utilisateur, toutes deux étant synchronisées mutuellement ;
le procédé comprend en outre :
la détection (202) de si un service acquis dans un système de service vocal automatique est requis pour entrer des informations personnelles d'utilisateur ;
si le service est requis pour entrer les informations personnelles d'utilisateur, l'acquisition (204) des informations personnelles d'utilisateur requises pour le service à partir d'une base de données d'informations personnelles d'utilisateur pré-stockée ; et
l'envoi (206) des informations personnelles d'utilisateur requises pour le service au système de service vocal automatique, où le système de service vocal automatique est configuré pour fournir le service selon les informations personnelles d'utilisateur ;
le procédé **caractérisé par**
la liaison (303) de la base de données d'informations personnelles d'utilisateur à une carte SIM d'un module d'identification d'utilisateur.

2. Procédé selon la revendication 1, **caractérisé en ce que**, la détection de si le service acquis dans le système de service vocal automatique est requis pour entrer les informations personnelles d'utilisateur inclut :
avant qu'un numéro de service du système de service vocal automatique ne soit composé, l'affichage d'au moins un service correspondant au numéro de service, la réception d'un signal de sélection correspondant au au moins un service, l'acquisition d'un menu de service correspondant au service sélectionné, et la détection de s'il est requis que les informations personnelles d'utilisateur soient entrées selon le menu de service ; ou
après qu'un numéro de service du système de service vocal automatique est composé, l'affichage d'au moins un service correspondant au numéro de service, la réception d'un signal de sélection correspondant au au moins un service, l'acquisition d'un menu de service correspondant au service sélectionné, et la détection de s'il est requis que les informations personnelles d'utilisateur soient entrées selon le menu de service.

3. Procédé selon la revendication 2, **caractérisé en ce que**, l'acquisition des informations personnelles d'utilisateur requises pour le service à partir de la base de données d'informations personnelles d'utilisateur pré-stockée inclut :
lorsque le menu de service inclut un type d'information des informations personnelles d'utilisateur requises pour le service, l'acquisition de m éléments des informations personnelles d'utilisateur qui correspondent au type d'information à partir de la base de données d'informations personnelles d'utilisateur pré-stockée, où la base de données d'informations personnelles d'utilisateur inclut n éléments d'informations personnelles d'utilisateur, 1≤m≤n, et m et n sont des entiers positifs ;
l'affichage des m éléments des informations personnelles d'utilisateur ;
la réception de signaux de sélection correspondant aux m éléments des informations personnelles d'utilisateur ; et
l'utilisation des informations personnelles d'utilisateur sélectionnées comme les informations personnelles d'utilisateur requises pour le service.

4. Procédé selon la revendication 3, **caractérisé en ce que**, l'affichage des m éléments des informations personnelles d'utilisateur inclut :
l'affichage d'une partie de contenus des informations personnelles d'utilisateur d'une manière cachée pour chaque élément des m éléments des informations personnelles d'utilisateur.

5. Procédé selon l'une quelconque des revendications 1 à 4, **caractérisé en ce que**, le stockage du au moins un élément des informations personnelles d'utilisateur dans la base de données d'informations personnelles d'utilisateur inclut :
le cryptage des informations personnelles d'utilisateur pour chaque élément des informations personnelles d'utilisateur reçues ; et
le stockage des informations personnelles d'utilisateur cryptées dans la base de données d'informations personnelles d'utilisateur.

6. Procédé selon l'une quelconque des revendications 1 à 5, **caractérisé en ce que**, le procédé comprend en outre :
la détection (305) de si une carte SIM dans un terminal est la carte SIM liée à la base de données personnelle d'utilisateur ; et
s'il est détecté que la carte SIM dans le terminal est la carte SIM liée à la base de données personnelle d'utilisateur, l'exécution de l'étape (306) consistant à acquérir les informations personnelles d'utilisateur requises pour le service à partir de la base de données d'informations personnelles d'utilisateur pré-stockée.

7. Procédé selon l'une quelconque des revendications 1 à 8, **caractérisé en ce que**, le procédé comprend en outre :
la détection de si un utilisateur actuel a une autorisation pour exploiter la base de données d'informations personnelles d'utilisateur ; et
s'il est détecté que l'utilisateur actuel a l'autorisation d'exploiter la base de données d'informations personnelles d'utilisateur, l'exécution d'une opération correspondante selon une instruction d'exploitation d'informations reçue, où l'instruction d'exploitation d'informations inclut l'une quelconque d'une instruction de visualisation d'informations, d'une instruction de modification d'informations et d'une instruction d'acquisition d'informations.

8. Procédé selon l'une quelconque des revendications 1 à 7, **caractérisé en ce que**, l'envoi des informations personnelles d'utilisateur requises pour le service au système de service vocal automatique inclut :
la génération d'au moins un signal multifréquence à deux tonalités (DTMF) correspondant aux informations personnelles d'utilisateur requises pour le service ; et
l'envoi du au moins un signal DTMF au système de service vocal automatique.

9. Dispositif pour envoyer des informations dans un service vocal, le dispositif comprenant :
un module de pré-réception d'informations configuré pour pré-recevoir au moins un élément des informations personnelles d'utilisateur ;
un module de stockage d'informations configuré pour stocker le au moins un élément des informations personnelles d'utilisateur dans la base de données d'informations personnelles d'utilisateur, où
la base de données d'informations personnelles d'utilisateur est stockée localement, ou
la base de données d'informations personnelles d'utilisateur est stockée dans un serveur avec un numéro de compte de service d'utilisateur, ou
la base de données d'informations personnelles d'utilisateur est non seulement stockée localement, mais est également stockée dans le serveur avec le numéro de compte de service d'utilisateur, toutes deux étant synchronisées mutuellement ;
un module de détection de service (410) configuré pour détecter si un service acquis dans un système de service vocal automatique est requis pour entrer des informations personnelles d'utilisateur ;
un module d'acquisition d'informations (420) configuré pour acquérir des informations personnelles d'utilisateur requises pour le service à partir d'une base de données d'informations personnelles d'utilisateur pré-stockée, si le service est requis pour entrer les informations personnelles d'utilisateur ; et
un module d'envoi d'informations (430) configuré pour envoyer les informations personnelles d'utilisateur requises pour le service au système de service vocal automatique, où le système de service vocal automatique est configuré pour fournir le service selon les informations personnelles d'utilisateur,
le dispositif étant **caractérisé en ce qu'**il inclut en outre
un module de liaison d'informations configuré pour lier la base de données d'informations personnelles d'utilisateur à une carte SIM d'un module d'identification d'utilisateur.

10. Dispositif selon la revendication 9, **caractérisé en ce que**, le module de détection de service (410) inclut une première unité de détection (410a) ou une seconde unité de détection (410b), dans lequel
la première unité de détection est configurée pour, avant qu'un numéro de service du système de service vocal automatique ne soit composé, afficher au moins un service correspondant au numéro de service, recevoir un signal de sélection correspondant au au moins un service, acquérir un menu de service correspondant au service sélectionné, et détecter s'il est requis que les informations personnelles d'utilisateur soient entrées selon le menu de service, et
la seconde unité de détection est configurée pour, après qu'un numéro de service du système de service vocal automatique est composé, afficher au moins un service correspondant au numéro de service, recevoir un signal de sélection correspondant au au moins un service, acquérir un menu de service correspondant au service sélectionné, et détecter s'il est requis que les informations personnelles d'utilisateur soient entrées selon le menu de service.

11. Dispositif selon la revendication 10, **caractérisé en ce que**, le module d'acquisition d'informations inclut une unité d'acquisition d'informations (420a), une unité d'affichage d'informations (420b), une unité de réception de sélection (420c) et une unité de détermination d'informations (420d), dans lequel
l'unité d'acquisition d'informations est configurée pour, lorsque le menu de service inclut un type d'information des informations personnelles d'utilisateur requises pour le service, acquérir m éléments des informations personnelles d'utilisateur qui correspondent au type d'information à partir de la base de données d'informations personnelles d'utilisateur pré-stockée, où la base de données d'informations personnelles d'utilisateur inclut n éléments des informations personnelles d'utilisateur, 1≤m≤n, et m et n sont des entiers positifs ;
l'unité d'affichage d'informations est configurée pour afficher les m éléments des informations personnelles d'utilisateur ;
l'unité de réception de sélection est configurée pour recevoir des signaux de sélection correspondant aux m éléments des informations personnelles d'utilisateur ; et
l'unité de détermination d'informations est configurée pour utiliser les informations personnelles d'utilisateur sélectionnées comme les informations personnelles d'utilisateur requises pour le service.

12. Dispositif selon l'une quelconque des revendications 9 à 11, **caractérisé en ce qu'**il inclut en outre :
un module de détection de carte configuré pour détecter si une carte SIM dans un terminal est la carte SIM liée à la base de données personnelle d'utilisateur, où
le module d'acquisition d'informations est en outre configuré pour, s'il est détecté que la carte SIM dans le terminal est la carte SIM liée à la base de données personnelle d'utilisateur, effectuer l'étape consistant à acquérir les informations personnelles d'utilisateur requises pour le service à partir de la base de données d'informations personnelles d'utilisateur pré-stockée.

13. Dispositif selon l'une quelconque des revendications 9 à 12, **caractérisé en ce que**
le module de stockage d'informations inclut une unité de cryptage d'informations et une unité de stockage d'informations, où
l'unité de cryptage d'informations est configurée pour crypter les informations personnelles d'utilisateur pour chaque élément des informations personnelles d'utilisateur reçues ; et
l'unité de stockage d'informations est configurée pour stocker les informations personnelles d'utilisateur cryptées dans la base de données d'informations personnelles d'utilisateur.

14. Programme d'ordinateur incluant des instructions pour exécuter les étapes d'un procédé pour envoyer des informations dans un service vocal selon l'une quelconque des revendications 1 à 8 lorsque ledit programme est exécuté par un ordinateur.

15. Support d'enregistrement lisible par un ordinateur et sur lequel est enregistré un programme d'ordinateur incluant des instructions pour exécuter les étapes d'un procédé pour envoyer des informations dans un service vocal selon l'une quelconque des revendications 1 à 8.
